(19) Europäisches Patentamt
European Patent Office
Office européen des brevets

(11) **EP 3 390 989 B1**

(12) **FASCICULE DE BREVET EUROPEEN**

(45) Date de publication et mention
de la délivrance du brevet:
**01.09.2021 Bulletin 2021/35**

(21) Numéro de dépôt: **16822924.3**

(22) Date de dépôt: **13.12.2016**

(51) Int Cl.:
*G01H 9/00* *(2006.01)*    *G01V 1/16* *(2006.01)*
*G01V 1/22* *(2006.01)*    *G01D 5/26* *(2006.01)*
*G01V 1/38* *(2006.01)*    *H04R 1/44* *(2006.01)*
*G01V 1/18* *(2006.01)*    *G08C 23/06* *(2006.01)*
*H04R 17/02* *(2006.01)*    *H04R 23/00* *(2006.01)*

(86) Numéro de dépôt international:
**PCT/EP2016/080860**

(87) Numéro de publication internationale:
**WO 2017/102767 (22.06.2017 Gazette 2017/25)**

(54) **TRANSDUCTEUR ELECTRO-OPTIQUE**

ELEKTROOPTISCHER WANDLER

ELECTRO-OPTICAL TRANSDUCER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2015 FR 1502606**

(43) Date de publication de la demande:
**24.10.2018 Bulletin 2018/43**

(73) Titulaire: **Thales**
**92400 Courbevoie (FR)**

(72) Inventeurs:
• **LARDAT, Raphaël**
**06903 Sophia Antipolis (FR)**
• **LAUNAY, François-Xavier**
**06903 Sophia Antipolis (FR)**

(74) Mandataire: **Marks & Clerk France**
**Immeuble "Visium"**
**22, avenue Aristide Briand**
**94117 Arcueil Cedex (FR)**

(56) Documents cités:
FR-A1- 2 504 285    US-A1- 2009 135 673
US-A1- 2014 175 271    US-B1- 8 659 211

EP 3 390 989 B1

**Description**

Le domaine général de l'invention est celui des dispositifs de mesure à fibre optique permettant la mesure de grandeurs physiques et de délivrer un signal optique véhiculé par une fibre optique représentatif de la grandeur physique mesurée. Elle concerne plus particulièrement les dispositifs de mesure d'une grandeur physique comprenant un capteur de grandeur physique à sortie électrique délivrant un signal électrique représentatif d'une grandeur physique mesurée et un transducteur électro-optique piézoélectrique recevant le signal électrique et permettant de transformer, par effet piézoélectrique, le signal électrique en une élongation d'une zone sensible d'une fibre optique de façon à faire varier une caractéristique d'un signal optique véhiculé par la fibre optique en fonction de la variation du signal électrique. Généralement la zone sensible de la fibre optique est un laser à fibre optique. La variation de l'élongation d'un laser à fibre optique a pour conséquence de faire varier la fréquence d'un signal optique émis par le laser à fibre optique en réponse à une énergie de pompe véhiculée par la fibre optique.

Cette invention s'applique tout particulièrement aux hydrophones hybrides du type comprenant un capteur acoustique, généralement du type piézoélectrique, permettant de délivrer un signal électrique représentatif d'une pression acoustique à laquelle est soumis le capteur et un transducteur électro-optique permettant de transformer le signal électrique délivré par le capteur en un signal optique véhiculé par la fibre optique représentatif de la pression acoustique mesurée. Elle concerne par exemple les antennes se présentant sous forme d'un objet allongé de grande longueur ou les barrières acoustiques qui sont des antennes posées au fond de l'eau qui permettent de surveiller le passage de bateaux par exemple le plus souvent à l'approche de zones importantes (ports, plateformes pétrolières, champs d'éolienne,...).

Un exemple de transducteur électro-optique 100 à actionneur piézoélectrique est décrit dans la demande de brevet WO 2007/056827. Ce transducteur électro-optique est représenté schématiquement sur la figure 1. Il comprend une fibre optique 110 comprenant une zone sensible 112 du type laser à fibre. La fibre optique véhicule un signal optique représentatif de l'élongation de la zone sensible selon l'axe de la fibre en réponse à une énergie de pompe véhiculée par la fibre optique. Le transducteur 100 comprend également un actionneur piézoélectrique comprenant deux barreaux piézoélectriques 103, 104. Chaque barreau piézoélectrique comprend deux électrodes plus +, moins - entre lesquelles sont appliquées les tensions électriques délivrées, créant un champ électrique au sein du barreau, par un capteur acoustique 102 via des fils électriques $f1^+$, $f1^-$, $f2^+$, $f2^-$. Les barreaux piézoélectriques 103, 104, sont aptes à se dilater et se contracter librement dans le sens de leurs longueurs en réponse à une variation du signal électrique. Les barreaux piézoélectriques 103, 104 sont couplés mécaniquement à la fibre optique 110 de façon que la dilatation ou la contraction des barreaux piézoélectriques dans le sens de leurs longueurs entraîne une variation d'élongation de la zone sensible 112 de la fibre optique 110 dans l'axe longitudinal de la fibre optique. L'ensemble est intégré dans un boîtier rigide 105.

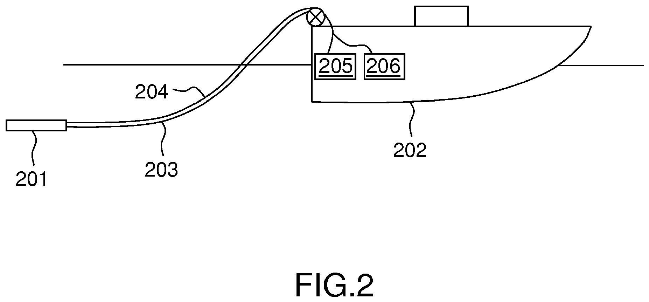

Ce type d'hydrophone hybride est particulièrement avantageux dans le domaine des antennes acoustiques sous-marines qui sont classiquement réalisées sous forme d'un objet allongé de faible diamètre. Elles sont aussi appelées antennes linéaires ou flûtes. Une antenne linéaire acoustique intègre une pluralité d'hydrophones et est destinée à être remorquée par un bâtiment marin ou reliée à une station terrestre au moyen d'un câble tracteur de grande longueur (pouvant dépasser 1km et atteindre 10 km). Une antenne acoustique de ce type fait généralement partie d'un dispositif de mesure tel que représenté sur la figure 2. Le dispositif de mesure comprend une antenne linéaire acoustique 201 remorqué par un bâtiment marin 202 au moyen d'un câble tracteur 203, une unité d'alimentation 205, permettant de produire de l'énergie destinée à alimenter les équipements compris dans l'antenne, et une unité de traitement 206, destinée à traiter les mesures issues des différents capteurs pour détecter et éventuellement localiser des objets. L'unité d'alimentation et l'unité de traitement sont déportées à bord du bâtiment marin 202 ou sur une station terrestre. Une liaison câblée 204 est prévue entre l'antenne acoustique 210 et les unités de traitement et d'alimentation 205, 206. La transformation des signaux électriques délivrés par les capteurs acoustiques en des signaux optiques véhiculés par une fibre optique permet d'assurer le transport, par la fibre optique 204, de l'information délivrée par les capteurs jusqu'à l'unité de traitement 206 sans apport d'énergie électrique extérieure et sans besoin de fils électriques. En d'autre termes, le transducteur assure une fonction de transport de l'information issue des capteurs sans besoin d'énergie électrique. Il s'agit donc d'une solution compacte, bon marché et légère. Cette solution permet également de multiplexer une pluralité d'hydrophones sur une même fibre optique de manière spectrale en configurant les différents lasers de façon à ce qu'ils émettent des signaux optiques présentant des longueurs d'onde respectives distinctes. L'unité de traitement 206 comprend alors des moyens permettant de démultiplexer les signaux issus des hydrophones respectifs et d'en déduire les mesures des pressions acoustiques issues des hydrophones respectifs.

Il est possible de sommer les mesures provenant de plusieurs senseurs acoustiques en les agençant en parallèle et/ou en série et en les connectant à un même transducteur électro-optique ce qui permet de diminuer le nombre de fibres optiques nécessaires au transport d'informations. Le coût du dispositif de mesure est ainsi réduit. Par ailleurs, un actionneur piézoélectrique nécessite une alimentation électrique de très faible puissance pour transformer une variation d'un signal électrique en une variation d'élongation d'une fibre optique. Le niveau de puissance électrique d'un signal électrique délivré par un capteur acoustique piézoélectrique soumis à une onde de pression de faible amplitude (de l'ordre de 45 dB μPa) est suffisant pour faire fonctionner l'actionneur. Ainsi, l'apport d'énergie électrique depuis une autre source d'énergie électrique n'est pas nécessaire. Les capteurs acoustiques opèrent en tant que sources de tension proportionnelles à la pression à mesurer, et cette source de tension est lue et transformée en une élongation de la fibre optique, le tout sans apport d'aucune source électrique de puissance. En d'autres termes, le transducteur assure une fonction de lecture des mesures issues des capteurs sans besoin d'énergie électrique. Par ailleurs, l'amplification et la numérisation des signaux de sortie des senseurs qui nécessiteraient un apport d'énergie extérieure ne sont pas nécessaires.

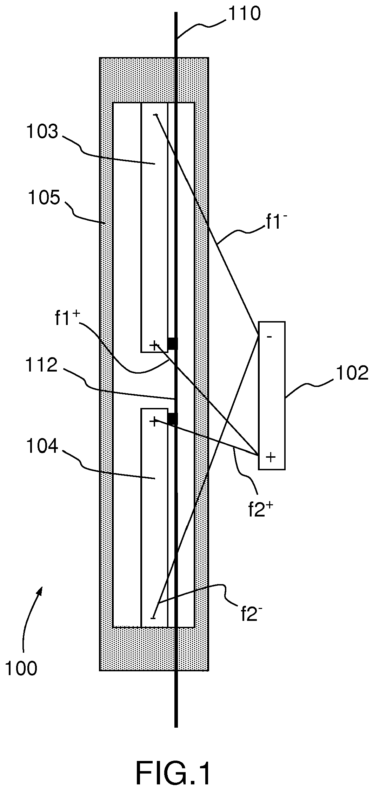

Dans la solution représentée sur la figure 1, le couplage électromécanique de chaque barreau piézoélectrique est longitudinal. Autrement dit, chaque barreau piézoélectrique est destiné à vibrer selon un mode de vibration longitudinal aussi appelé mode 33. La capacité du transducteur en approximation basse fréquence est donnée par la formule suivante :

$$C_{aa} = 2n^2 \frac{A}{L} \varepsilon_{33}^T \ [1]$$

où n est le nombre de sections connectées en parallèle sur chaque barreau piézoélectrique, où L est la longueur des barreaux piézoélectriques, $\varepsilon_{33}^T$ le coefficient diélectrique et A est la section des barreaux piézoélectriques dans un plan perpendiculaire à leur longueur. La capacité du transducteur est exprimée en Farad.

Afin d'augmenter la sensibilité électro-optique des hydrophones, c'est-à-dire la variation de fréquence du laser en fonction de la variation de la pression acoustique (exprimée en Hz/Pa), la capacité du transpondeur doit être proche de celle du capteur (par exemple hydrophone) auquel il est relié électriquement. A cet effet, il est nécessaire, pour une longueur L prédéterminée, d'augmenter le nombre n de sections connectées en parallèle le long d'un barreau piézoélectrique. Cela implique de diviser chaque barreau en une pluralité de sections reliées au capteur au moyen d'un couple de fils électriques et un couple d'électrodes dédié.. Toutefois, cette solution présente un certain nombre d'inconvénients. La multiplication du nombre de fils électriques et d'électrodes conduit à une perte en termes de simplicité de l'architecture et de fabrication.

Un but de l'invention est de pallier au moins un des inconvénients précités.

A cet effet l'invention a pour un transducteur électro-optique permettant de transformer un signal électrique délivré par un capteur de mesure physique en un signal optique, ledit transducteur électro-optique comprenant :

- une fibre optique comprenant un tronçon de fibre optique comprenant une zone sensible, la fibre optique véhiculant ledit signal optique, ledit signal optique étant représentatif d'une élongation de la zone sensible, le tronçon de fibre optique étant tendu et s'étendant longitudinalement au repos sensiblement selon un axe longitudinal,
- un actionneur piézoélectrique comprenant au moins un ensemble piézoélectrique comprenant un barreau piézoélectrique, le barreau piézoélectrique s'étendant longitudinalement au repos sensiblement parallèlement à l'axe longitudinal, ledit barreau piézoélectrique étant pourvu d'un couple d'électrodes entre lesquelles le barreau piézoélectrique est destiné à être alimenté électriquement au moyen du signal électrique, ledit barreau piézoélectrique étant destiné à se déformer essentiellement par dilatation ou contraction dudit barreau parallèlement à l'axe longitudinal en réponse à une variation du signal électrique et étant couplé mécaniquement au tronçon de fibre optique de façon que cette dilatation ou contraction du barreau piézoélectrique entraîne une variation d'élongation de la zone sensible,

le barreau piézoélectrique est en monocristal et est destiné à vibrer en mode 31 ou 32.

Le transducteur présente avantageusement au moins une des caractéristiques suivantes prises seules ou en combinaison :

- le transducteur comprend un boîtier renfermant ledit actionneur, ledit tronçon de fibre optique, le barreau piézoélectrique comprenant une extrémité mobile apte à se déplacer par rapport au boîtier lors de ladite dilatation ou de ladite contraction du barreau piézoélectrique sensiblement parallèlement à la direction longitudinale,
- l'actionneur piézoélectrique comprend un dispositif de couplage permettant de coupler mécaniquement l'extrémité mobile au tronçon de fibre optique, ledit dispositif de couplage comprenant un chariot fixé à une portion du tronçon de fibre optique et étant apte à se déplacer en translation par rapport au boîtier selon l'axe longitudinal, ledit dispositif de couplage comprenant en outre un organe de liaison permettant de relier le chariot à une zone de jonction solidaire du boîtier, l'organe de liaison étant conçu pour autoriser une translation du chariot par rapport au boîtier dans la direction axiale mais pour empêcher tout mouvement significatif du chariot par rapport au boîtier dans un plan perpendiculaire à la direction axiale ;
- le barreau piézoélectrique comprend une extrémité dite fixe, fixe par rapport au boîtier ;
- l'organe de liaison comprend au moins une lame de flexion s'étendant, au repos, dans un plan sensiblement perpendiculaire à l'axe longitudinal et reliant le chariot à une zone de jonction solidaire du boîtier ;
- la lame est à symétrie de révolution autour de l'axe,
- le transducteur comprend deux lames s'étendant, au repos, dans des plans respectifs distincts sensiblement perpendiculaires à l'axe longitudinal,
- le transducteur comprend un boîtier renfermant l'actionneur piézoélectrique et le tronçon de fibre optique, ledit actionneur piézoélectrique comprend une pluralité d'ensembles piézoélectriques agencés de sorte à former au moins un couple dit longitudinal de deux ensembles piézoélectriques dont les barreaux piézoélectriques comprennent chacun une extrémité fixe par rapport au boîtier et une extrémité mobile apte à se déplacer par rapport au boîtier sous l'effet d'une dilatation ou d'une contraction dudit barreau piézoélectrique, lesdits barreaux piézoélectriques des deux ensembles piézoélectriques du couple longitudinal étant alignés selon un axe sensiblement parallèle à l'axe longitudinal et leurs extrémités mobiles se déplaçant en sens contraire sous l'effet d'une dilatation desdits barreaux ou sous l'effet d'une contraction desdits barreaux piézoélectriques parallèlement à l'axe longitudinal, les portions du tronçon de fibre solidaires des extrémités mobiles desdits barreaux piézoélectriques entourant la zone sensible,
- les extrémités fixes des barreaux piézoélectriques des deux ensembles piézoélectriques du couple longitudinal sont positionnées l'une en regard de l'autre ;
- l'actionneur piézoélectrique présente un premier plan de symétrie perpendiculaire à l'axe,
- le transducteur comprend un boîtier renfermant l'actionneur piézoélectrique et le tronçon de fibre optique, ledit actionneur piézoélectrique comprend une pluralité d'ensembles piézoélectriques agencés de sorte à former au moins un groupe dit transversal d'une pluralité d'ensembles piézoélectriques dont les barreaux piézoélectriques comprennent chacun une extrémité fixe par rapport au boîtier et une extrémité mobile apte à se déplacer par rapport au boîtier sous l'effet d'une dilatation ou d'un contraction dudit barreau piézoélectrique sensiblement parallèlement à l'axe longitudinal, lesdits barreaux piézoélectriques des ensembles piézoélectriques comprenant au moins un couple transverse d'ensembles piézoélectriques dont les barreaux piézoélectriques sont situés de part et respectivement d'autre part de l'axe longitudinal selon une direction perpendiculaire à l'axe longitudinal, étant solidaires d'une même portion du tronçon de fibre optique et se déplaçant dans le même sens sous l'effet d'une dilatation desdits barreaux piézoélectriques ou sous l'effet d'une contraction desdits barreaux piézoélectriques parallèlement à l'axe longitudinal,
- le transducteur comprend quatre ensembles piézoélectriques formant deux couples longitudinaux et deux groupes transverses, chaque groupe transverse comprenant chacun un couple transverse,
- l'actionneur piézoélectrique présente deux plans de symétrie perpendiculaires l'un à l'autre et contenant l'axe.
- le chariot et/ou la zone de jonction et/ou le boîtier sont réalisés dans un matériau présentant un coefficient de dilatation thermique inférieur à $10.10^{-6}/K^{-1}$ à 15°C et à pression atmosphérique.

L'invention se rapporte également à un dispositif de mesure d'une grandeur physique comprenant un transducteur électro-optique selon l'une quelconque des revendications 1 à 14, un capteur apte à délivrer le signal électrique, le signal électrique étant représentatif d'une grandeur physique mesurée par ledit capteur, ledit capteur étant couplé électriquement audit barreau de façon à alimenter électriquement ledit barreau piézoélectrique au moyen du signal électrique.

Avantageusement, le dispositif comprend une pluralité d'ensembles piézoélectriques dont les barreaux piézoélectrique respectifs sont couplés audit capteur de façon que les barreaux piézoélectriques se dilatent simultanément ou se contractent simultanément.

Avantageusement, le capteur comprend une pluralité de senseurs montés en série et/ou en parallèle.

La solution proposée permet de réaliser un transducteur de forte capacité tout en conservant une grande sensibilité électro-optique ainsi qu'une facilité de fabrication du dispositif de mesure.

D'autres caractéristiques et avantages de l'invention apparaîtront à la lecture de la description détaillée qui suit, faite à titre d'exemple non limitatif et en référence aux dessins annexés dans lesquels :

- la figure 1 déjà décrite représente un hydrophone hybride comprenant un transducteur électro-optique selon l'art antérieur,
- la figure 2 déjà décrite représente schématiquement un dispositif de mesure comprenant une antenne acoustique linéaire,
- la figure 3 représente schématiquement le dispositif de mesure selon l'invention,
- la figure 4a représente schématiquement en coupe un dispositif de couplage selon l'invention au repos, la figure 4b représente schématiquement en perspective un dispositif de couplage selon l'invention, la figure 4c représente schématiquement le dispositif de couplage de la figure 4a après dilatation de barreaux piézoélectriques,
- la figure 5 représente schématiquement un détail d'une portion de la figure 3 entourée en trait continu C,

D'une figure à l'autre, les mêmes éléments sont repérés par les mêmes références.
L'invention se rapporte à un transducteur électro-optique destiné à transformer un signal électrique, généré en sortie d'un capteur à sortie électrique en réponse à une grandeur physique, en un signal optique véhiculé dans une fibre optique, représentatif du signal électrique et par conséquent de la grandeur physique mesurée. Par capteur à sortie électrique on entend un capteur permettant de mesurer une grandeur physique et délivrant un signal électrique représentatif de la grandeur physique mesurée.

Le transducteur électro-optique comprend un actionneur piézoélectrique, comprenant au moins un barreau piézoélectrique réalisé en matériau piézoélectrique, permettant de transformer un signal électrique en un signal optique véhiculé par une fibre optique en agissant sur l'élongation d'une zone sensible de la fibre optique de façon à faire varier en conséquence une caractéristique d'un signal optique véhiculé par la fibre optique. Le signal optique présente une caractéristique représentative du signal électrique lui-même représentatif de la grandeur physique mesurée.

L'invention se rapporte également à un dispositif de mesure permettant de mesurer une grandeur physique comprenant un capteur permettant de mesurer la grandeur physique et de délivrer un signal électrique représentatif de la grandeur physique mesurée et un transducteur électro-optique selon l'invention soumis audit signal électrique de façon que le transducteur transforme le signal électrique en un signal optique véhiculé par la fibre optique représentatif dudit signal électrique.

Cette invention concerne tout particulièrement les hydrophones hybrides du type comprenant un capteur comprenant au moins un senseur permettant de transformer une pression acoustique en un signal électrique.

L'invention ne se limite bien entendu pas aux hydrophones. Elle concerne tout dispositif de mesure comprenant un capteur de grandeur physique permettant de délivrer un signal électrique représentatif d'une grandeur physique. Le capteur peut par exemple être, de façon non exhaustive, un capteur de cap, un capteur de pression, un capteur d'accélération, un capteur d'immersion, de température, une antenne radiofréquence. La sortie de ce capteur peut être analogique ou numérique.

Le capteur peut comprendre un unique senseur ou une pluralité de senseurs agencés en série et/ou en parallèle ou une combinaison série/parallèle.

L'ensemble d'au moins un senseur délivre un premier signal électrique. L'ensemble d'au moins un senseur peut être relié directement au transducteur électro-optique, le premier signal électrique est alors le signal électrique délivré par le capteur. Le capteur peut comprendre un filtre interposé entre l'ensemble d'au moins un senseur et le transducteur électro optique. Le signal électrique délivré par le capteur est alors un signal électrique obtenu par filtrage du premier signal électrique. Le transducteur électro-optique est naturellement passe haut donc un filtre n'est pas indispensable pour filtrer le continu.

Le signal électrique est une tension représentative de la grandeur physique. Le signal électrique permet d'alimenter électriquement le (ou les) barreau(x) piézoélectrique(s), c'est-à-dire d'appliquer un champ électrique sur le (ou les) barreau(x) piézoélectrique(s) entre les électrodes.

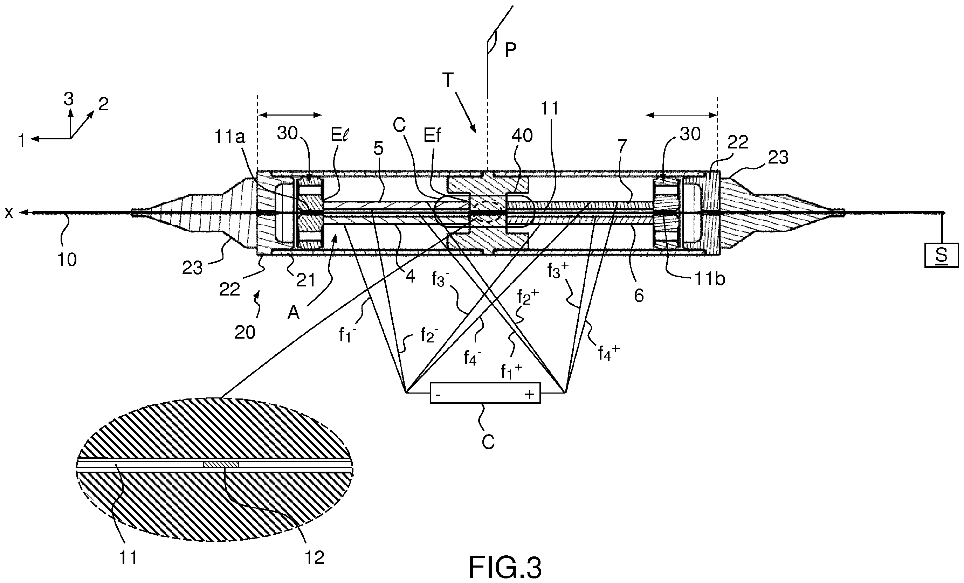

La figure 3 représente schématiquement un dispositif de mesure selon l'invention. Ce dispositif de mesure comprend un capteur C tel que défini précédemment et un transducteur électro-optique T selon l'invention comprenant une fibre optique 10. Le transducteur électro-optique T est couplé électriquement au capteur C de façon à transformer un signal électrique délivré par le capteur C et appliqué au transducteur électro-optique T en un signal optique, véhiculé par une fibre optique 10, représentatif du signal électrique. Plus précisément, le transducteur électro-optique transforme, par effet piézoélectrique, une variation d'un signal électrique délivré par le capteur en une variation d'une élongation d'une zone sensible 12 de la fibre optique. La fibre optique 10 véhicule un signal optique présentant une caractéristique représentative d'une élongation de la zone sensible 12 dans le sens de la longueur de la fibre optique 10. La variation d'élongation de la zone sensible 12 se traduit par conséquent par une variation de la caractéristique du signal optique véhiculé par la fibre. La caractéristique du signal optique est représentative de l'élongation de la zone sensible 12 la fibre optique 10 elle-même représentative du signal électrique représentatif de la grandeur physique.

La caractéristique du signal optique qui varie avec l'élongation de la zone sensible est par exemple une longueur d'onde ou une phase d'un signal.

La zone sensible 12 est par exemple du type laser à fibre. Les lasers à fibre comprennent un réseau de Bragg inscrit dans la zone sensible 12 de la fibre optique 10. Le laser à fibre émet un signal optique présentant une longueur d'onde représentative de l'élongation de la zone sensible 12 dans le sens de la longueur de la fibre optique 10. En variante, le transducteur est configuré de sorte à transformer une variation d'un signal électrique en une variation d'une élongation de la zone sensible d'une fibre optique se traduisant par une variation de la phase du premier signal optique. Dans ce cas, il n'y a pas de réseau de Bragg inscrit dans la fibre optique.

Le transducteur électro-optique comprend un actionneur piézoélectrique A. L'actionneur piézoélectrique A permet de transformer, par effet piézoélectrique, un signal électrique délivré par le capteur C en une élongation de la zone sensible 12 représentative du signal électrique.

A cet effet, l'actionneur piézoélectrique A comprend une pluralité d'ensembles piézoélectriques comprenant chacun un barreau piézoélectrique 4, 5, 6, 7 réalisé en matériau piézoélectrique, des électrodes et des fils électriques associés. Sur la réalisation des figures, l'actionneur A comprend quatre barreaux piézoélectriques. Ce mode de réalisation n'est pas limitatif, l'actionneur pouvant en variante comprendre un barreau piézoélectrique ou une pluralité de barreaux piézoélectriques en nombre différent de quatre.

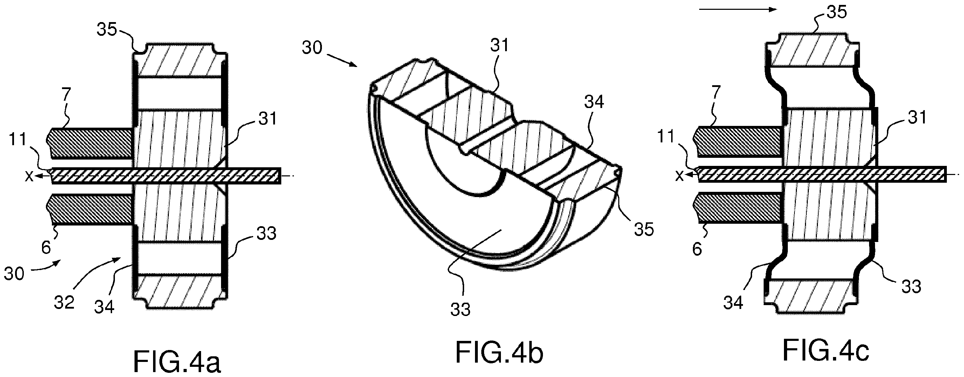

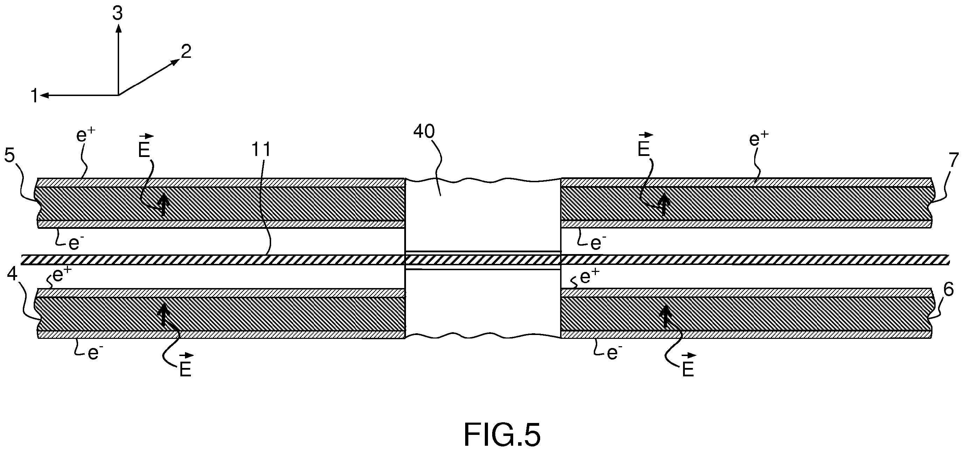

Chaque ensemble piézoélectrique comprend un couple de fils électriques $f_1^+$, $f_1^-$, $f_2^+$, $f_2^-$, $f_3^+$, $f_3^-$, $f_4^+$, $f_4^-$ permettant de coupler électriquement un des barreaux piézoélectriques 4, 5, 6, 7 au capteur C de façon à alimenter électriquement le barreau piézoélectrique 4, 5, 6, 7 au moyen du signal électrique délivré par le capteur C. A cet effet, comme représenté sur la figure 5, les barreaux piézoélectriques sont pourvus à leurs surfaces d'électrodes conductrices e+, e- faisant partie de l'ensemble piézoélectrique considéré. Ces électrodes équipant les barreaux respectifs sont reliées aux couples de fils électriques respectifs. La direction et le sens du champ électrique E auquel sont soumis les différents barreaux piézoélectriques sont représentés par des flèches sur la figure 5. Pour plus de clarté, les électrodes ne sont pas représentées sur les figures 3 et 4.

Comme visible sur l'agrandissement de la figure 3, les barreaux piézoélectriques 4, 5, 6, 7 sont couplés à un tronçon de fibre optique 11 comprenant la zone sensible 12. Le tronçon de fibre optique 11 est tendu et s'étend longitudinalement au repos selon un axe longitudinal x. Le tronçon de fibre optique 11 est précontraint de façon à rester en tension quels que soient les mouvements du transducteur et la valeur du signal électrique généré par le capteur sous l'effet de la grandeur physique dans la zone de fonctionnement du capteur.

Au repos, les barreaux piézoélectriques 4, 5, 6, 7 s'étendent longitudinalement selon des directions respectives sensiblement parallèles à l'axe longitudinal x. Dans la présente demande de brevet, on entend que les barreaux piézoélectriques et le tronçon de fibre optique sont au repos lorsque les barreaux ne sont pas alimentés électriquement et lorsque le transducteur n'est soumis à aucune accélération. Par sensiblement parallèlement, on entend que les axes longitudinaux des barreaux présentent des inclinaisons maximales faibles qui peuvent provenir des tolérances de fabrication. Cela permet une meilleure coopération entre les barreaux et de limiter la sensibilité du transducteur aux accélérations transverses.

Chaque barreau piézoélectrique 4, 5, 6, 7 est agencé de sorte à être destiné à se déformer en réponse à une variation du signal électrique, c'est-à-dire en réponse à une variation du champ électrique auquel il est soumis, essentiellement par dilatation ou contraction dans le sens de sa longueur parallèlement à l'axe longitudinal. Autrement dit, les barreaux travaillent essentiellement en traction-compression parallèlement à l'axe x. C'est l'ensemble du barreau qui se contracte ou qui se dilate parallèlement à l'axe longitudinal x. Cela est obtenu par le couplage mécanique de chaque barreau piézoélectrique par rapport à un boîtier rigide 20 renfermant l'actionneur A et le tronçon 11 de fibre optique auquel il est couplé. Ce couplage permet une translation des deux extrémités longitudinales du barreau l'une par rapport à l'autre le long de l'axe x du boîtier 20. Pour chaque barreau, les faces longitudinales du barreau (faces parallèles à l'axe x) qui sont parallèles entre elles sont destinées à se déformer de la même manière sous l'effet d'une variation du champ électrique E. Chaque barreau 4, 5, 6, 7 est couplé mécaniquement au tronçon de fibre optique 11 de façon que la dilation et la contraction du barreau électrique 4, 5, 6, 7 parallèlement à l'axe x entraînent des variations d'élongation du tronçon 11 et par conséquent des variations d'élongation de la zone sensible 12. Plus précisément, la dilation et la contraction du barreau électrique 4, 5, 6, 7 parallèlement à l'axe longitudinalement x entraînent chacune une déformation du tronçon 11 essentiellement selon l'axe x et plus précisément une variation d'élongation de ce tronçon selon l'axe x.

La déformation du barreau essentiellement par dilatation ou contraction dans le sens de sa longueur parallèlement à l'axe de la fibre au repos permet d'obtenir un meilleur rendement en élongation de la fibre par rapport à l'énergie électrique apportée au barreau qu'avec un barreau piézoélectrique travaillant en flexion (c'est-à-dire un barreau fonctionnant en mode bender selon la terminologie anglo-saxonne). Ce type de couplage permet également des géométries symétriques par rapport à l'axe de la fibre d'où une sensibilité aux accélérations parasites moindre.Les barreaux piézoélectriques 4, 5, 7 sont parallélépipédiques. Avantageusement, les barreaux sont des parallélépipèdes rectangles. Ces barreaux présentent une longueur Lp (direction des barreaux selon l'axe x) et une épaisseur h (distance entre les électrodes).

Dans le transducteur électro-optique T selon l'invention, chaque barreau piézoélectrique 4, 5, 6, 7 est en monocristal. L'utilisation de monocristaux permet d'obtenir une élongation importante pour un champ électrique donné ce qui permet d'obtenir un transducteur présentant une bonne sensibilité. Il s'agit par exemple de PZN-PT ou PMN-PT. Par ailleurs, les barreaux 4, 5, 6, 7 sont destinés à vibrer en mode transversal aussi appelé mode 31 ou 32. Autrement dit, le couplage électromécanique du barreau piézoélectrique est transversal. Cela signifie que les fils électriques $f_1^+$, $f_1^-$, $f_2^+$, $f_2^-$, $f_3^+$, $f_3^-$, $f_4^+$, $f_4^-$ sont connectés aux barreaux piézoélectriques de sorte à alimenter électriquement le matériau du barreau piézoélectrique, c'est-à-dire à soumettre le barreau piézoélectrique à un champ électrique, selon un axe perpendiculaire ou sensiblement perpendiculaire à son axe principal de déformation. L'axe principal de déformation est l'axe selon lequel les barreaux se déforment principalement sous l'effet du champ électrique appliqué au moyen des fils électriques. L'axe de déformation principal est parallèle ou sensiblement parallèle à l'axe x. Dans l'exemple représenté sur la figure 3, l'axe de déformation principal est l'axe 1 dans un trièdre orthogonal 1, 2, 3 lié au barreau et classiquement utilisé pour les matériaux piézoélectriques. Les barreaux fonctionnent en mode 31.

Chaque barreau piézoélectrique comprend une première électrode e+ et une deuxième électrode e- disposées sur des faces respectives du barreau piézoélectrique. Ces faces sont définies par l'axe de déformation principal des barreaux et par un axe perpendiculaire à l'axe d'application du champ électrique E. Sur la réalisation de la figure 3, les électrodes s'étendent dans le plan 1, 2.

Les modes 31 et 32 présentent le même facteur de mérite que le mode 33 (mode longitudinal) mais présentent l'avantage de permettre d'obtenir un transducteur électro-optique présentant une capacité nettement supérieure à celle d'un transducteur selon l'art antérieur tout en conservant une grande sensibilité électro-optique ainsi qu'une facilité de fabrication.

En effet, la capacité électro-optique $C_A$ du transducteur, exprimée en Farads, selon l'invention en approximation basse fréquence est donnée par la formule suivante :

$$C_A = 2 \frac{L_P b}{h} \varepsilon_{33}^T \quad [2]$$

Où $L_p$ est la longueur du barreau piézoélectrique selon l'axe 1 pour le mode 31 et selon l'axe 2 pour le mode 32, h l'épaisseur des barreaux piézoélectriques selon l'axe 3 c'est-à-dire la distance entre électrodes, b la largeur des barreaux selon l'axe 2 (mode 31) ou selon l'axe 1 (mode 32).

La capacité $C_A$ du transducteur selon l'invention est beaucoup plus importante que la capacité $C_{aa}$, que présenterait un transducteur du type de celui de la figure 1 qui présenterait des barreaux de mêmes dimensions avec une seule section (n=1) de longueur $L_p$ et le même coefficient diélectrique. En effet, d'après la formule 1, cette capacité serait donnée par la formule suivante :

$$C_{aa'} = 2n^2 \frac{b*h}{L_p} \varepsilon_{33}^T \quad [3]$$

Par conséquent d'après les formules [2] et [3] :

$$C_A / C_{aa}' = L_p^2 \ / h^2 >> 1$$

En effet, l'épaisseur h est largement plus faible que la longueur $L_p$.

La capacité du transducteur selon l'invention est par conséquent très importante pour un nombre de connexions réduit de fils électriques. Par conséquent, le transducteur selon l'invention présente une bonne sensibilité électro-optique et est de fabrication aisée. Par ailleurs, la capacité du transducteur est facilement réglable en réglant la longueur des barreaux piézoélectriques.

Typiquement, le transducteur selon l'invention peut présenter une capacité supérieure à 1 nF et une sensibilité supérieure à 160 dB Hz/V. Un hydrophone hybride intégrant un transducteur selon l'invention permet donc de lire de très faibles variations de pression acoustique.

La sensibilité électro-optique Su du transducteur selon l'invention, exprimée en dB, est donnée par la formule suivante obtenue par modélisation analytique :

$$Su = 20 \log \left[ 0.78 f_L \frac{d_{31} L_P}{h L_F} \right]$$

avec $f_L$ la fréquence du laser, $d_{31}$ le coefficient piézoélectrique et $L_F$ la longueur de fibre étirée.

Comme visible sur la figure 3, le transducteur T selon l'invention comprend un boîtier 20 renfermant l'actionneur piézoélectrique et le tronçon de fibre optique 11 sur lequel agit l'actionneur. Cela permet de protéger l'actionneur piézoélectrique. Avantageusement le boîtier est rigide ce qui permet de rendre le transducteur insensible à la pression exercée par un liquide dans lequel est plongé le boîtier et d'obtenir une bonne résistance à l'immersion. Par rigide, on entend que le boîtier est indéformable dans toute la plage de pressions d'utilisation du transducteur. Le boîtier rigide est fixé à la fibre optique de part et d'autre du tronçon 11 de fibre optique. Le boîtier est fermé hermétiquement.

Le boîtier 20 comprend une partie centrale rigide sous forme d'un tube rigide 21, des parties d'extrémité comprenant des bouchons rigides 22 et des pièces de maintien 23 en appui sur le tube 21 et solidaires des extrémités du tronçon 11. Les bouchons et le tube pourraient en variante former une seule pièce. Le tronçon de fibre optique 11 auquel est couplé l'actionneur est renfermé à l'intérieur du boîtier 20. Le tube 21 est avantageusement à symétrie de révolution autour de l'axe x.

Sur la réalisation des figures, l'actionneur piézoélectrique comprend quatre barreaux piézoélectriques : un premier 4, un deuxième 5, un troisième 6 et un quatrième 7 barreau piézoélectrique.

L'actionneur piézoélectrique comprend des dispositifs de couplage 30 permettant de coupler mécaniquement les barreaux piézoélectriques au tronçon de fibre optique 11 de façon que la déformation des barreaux sous l'effet d'une variation du signal électrique provoque une variation d'élongation de la fibre optique.

Chaque barreau piézoélectrique 4, 5, 6, 7 s'étend longitudinalement depuis une première extrémité jusqu'à une deuxième extrémité. La première extrémité, appelée extrémité mobile El, est destinée à se déplacer essentiellement parallèlement à l'axe x par rapport au boîtier 20 sous l'effet d'une variation du signal électrique, c'est-à-dire sous l'effet d'une déformation du barreau piézoélectrique selon l'axe x. Chaque extrémité mobile El est solidaire d'une portion 11a, 11b du tronçon de fibre optique 11. La deuxième extrémité, appelée extrémité fixe Ef, est fixe par rapport au boîtier 20. Pour plus de clarté, les extrémités El et Ef sont référencées uniquement pour le deuxième barreau 5 sur la figure 3. Lors de la dilation ou la contraction des barreaux piézoélectriques 4, 5, 6, 7, les extrémités fixes Ef restent fixes par rapport au boîtier 20 et les extrémités mobiles El se déplacent par rapport aux extrémités fixes Ef respectives dans le sens de la longueur des barreaux piézoélectriques 4, 5, 6, 7, c'est-à-dire selon la longueur des barreaux, c'est-à-dire sensiblement parallèlement à la direction x.

Sur la réalisation de la figure 3, les différents ensembles piézoélectriques de l'actionneur piézoélectrique A sont agencés de sorte à former deux groupes d'ensembles piézoélectriques longitudinaux. Un premier groupe longitudinal comprend les barreaux piézoélectriques 4 et 6. Ces barreaux 4 et 6 sont alignés selon un axe sensiblement parallèle à l'axe du tronçon 11, c'est-à-dire à l'axe longitudinal x. Le deuxième groupe longitudinal comprend les deux barreaux piézoélectriques 5 et 7. Ces barreaux 5 et 7 sont alignés selon un autre axe sensiblement parallèle à l'axe x. Par conséquent chaque groupe longitudinal est un couple longitudinal et les deux barreaux de chacun des couples longitudinaux sont disposés côté à côte selon un axe sensiblement parallèle à l'axe x et s'étendent longitudinalement sensiblement parallèlement à un même axe x. Les extrémités mobiles El des deux barreaux 4 et 6 ou 5 et 7 de chacun des groupes longitudinaux se déplacent en sens contraire sous l'effet d'une dilatation des barreaux ou sous l'effet d'une contraction des barreaux parallèlement à la direction longitudinale x. Les portions 11a, 11b du tronçon de fibre 11 solidaires des extrémités mobiles El des barreaux piézoélectrique de chacun des groupes longitudinaux entourent la zone sensible 12. En variante, le dispositif selon l'invention comprend un seul groupe longitudinal ou plus de deux groupes longitudinaux.

Avantageusement, tous les barreaux piézoélectriques sont agencés et alimentés électriquement au moyen du signal électrique de sorte à générer soit la dilatation de tous les barreaux piézoélectriques de façon simultanée soit la contraction de tous les barreaux piézoélectriques de façon simultanée. Les barreaux piézoélectriques sont avantageusement alimentés en parallèle.

Sur la réalisation de la figure 3, les deux extrémités fixes Ef de deux barreaux 4 et 6 ou 5 et 7 alignés selon une direction sensiblement parallèle à l'axe x sont situées en regard l'une de l'autre. Autrement dit, les deux extrémités fixes Ef des deux barreaux sont les extrémités adjacentes des deux barreaux. La distance séparant les extrémités fixes des deux barreaux est inférieure à la distance séparant les extrémités mobiles El des deux barreaux.

Par conséquent, lorsque les barreaux 4, 5, 6, 7 se dilatent sous l'effet d'une variation du signal électrique, l'élongation de la zone sensible augmente. On agit ainsi sur l'élongation d'une portion de la fibre optique de grande longueur lors de la dilation ou rétractation (contraction) des barreaux ce qui permet de ne pas perturber le fonctionnement du laser.

Sur l'exemple des figures 3 et 5, les extrémités fixes Ef des barreaux 4, 5, 6, 7 sont fixées à un support 40 solidaire du boîtier 20 interposé entre les barreaux 4, 6 du premier couple d'ensembles piézoélectriques et entre les barreaux piézoélectriques 5, 7 du deuxième couple d'ensembles piézoélectriques. En variante, les extrémités fixes Ef sont solidaires du boîtier 20 ou de supports distincts. Le support 40 n'a pas une forme limitée à la représentation de la figure 3.

En variante, les extrémités mobiles El des barreaux alignés selon un même axe sont disposées en regard l'une de l'autre. On agit ainsi sur l'élongation d'une portion de la fibre optique de faible longueur lors de la dilation ou rétractation des barreaux. Avantageusement, l'actionneur piézoélectrique A présente un premier plan P de symétrie perpendiculaire à l'axe longitudinal x. Autrement dit, les barreaux piézoélectriques alignés selon un même axe sont identiques, c'est-à-dire sont réalisés dans un même matériau, présentent les mêmes dimensions et la même orientation autour de l'axe selon lequel ils sont alignés et sont couplés à la fibre optique au moyen de dispositifs de couplage identiques. Cette caractéristique permet de limiter la sensibilité du transducteur à des accélérations selon la direction axiale (parallèles à l'axe x). En effet, les deux barreaux alignés selon un même axe selon la direction axiale présentent une même raideur et se déforment de façon contraire sous l'effet d'une accélération axiale ce qui permet d'éviter une variation d'élongation de la zone sensible 12.

Dans une variante, l'actionneur piézoélectrique comprend un unique barreau piézoélectrique par axe parallèle à l'axe longitudinal x. Dans ce cas, le barreau piézoélectrique comprend deux extrémités mobiles selon l'axe x qui sont chacune couplées à la fibre optique au moyen d'un dispositif de couplage 30.

Avantageusement, comme c'est le cas de la figure 3, les ensembles piézoélectriques de l'actionneur sont agencés de sorte à former au moins un groupe d'ensembles piézoélectriques transverse d'ensembles piézoélectriques dont les barreaux piézoélectriques 4 et 5 (ou respectivement 6 et 7) comprennent chacun une extrémité fixe Ef par rapport au boîtier 20 et une extrémité mobile El apte à se déplacer par rapport au boîtier 20 sous l'effet d'une dilatation ou d'une contraction dudit barreau piézoélectrique parallèlement à l'axe x, c'est-à-dire sous l'effet d'une variation du signal électrique d'alimentation. Chaque groupe transverse comprend au moins un couple transverse d'ensembles piézoélectriques dont les barreaux piézoélectriques de chaque groupe transverse, c'est-à-dire les barreaux 4 et 5 ou respectivement les barreaux 6 et 7 sont situés de part et respectivement d'autre part de l'axe longitudinal x selon une direction perpendiculaire à l'axe longitudinal x. Les barreaux piézoélectriques 4 et 5, ou respectivement 6 et 7, de chaque couple transverse sont solidaires d'une même portion 11a, ou respectivement 11b, du tronçon de fibre optique 11 et se déplacent dans le même sens sous l'effet d'une dilatation des barreaux ou sous l'effet d'une contraction desdits barreaux piézoélectriques sensiblement parallèlement à l'axe longitudinal, c'est-à-dire sous l'effet d'une variation du signal électrique en soumettant les barreaux à des champs électriques induisant une dilatation simultanée de tous les barreaux ou une contraction simultanée de tous les barreaux.

Sur la réalisation de la figure 3, le dispositif comprend deux groupes transverses. Chacun des groupes transverses comprend deux ensembles piézoélectriques, c'est-à-dire deux barreaux piézoélectriques barreaux 4 et 5 et respectivement 6 et 7. Les extrémités mobiles des barreaux de deux groupes transverses différents se déplacent en sens contraire sous l'effet d'une dilatation des barreaux parallèlement à l'axe x.

Avantageusement, l'actionneur piézoélectrique présente deux autres plans de symétrie, qui sont les plans orthogonaux au plan P de la figure 3, et qui comprennent l'axe x. Cette caractéristique permet de limiter la sensibilité du transducteur aux accélérations selon les directions transversales 1 et 2

Chaque groupe transverse peut comprendre plus de deux ensembles piézoélectriques. Les barreaux piézoélectriques d'un groupe transverse présentent par exemple des axes longitudinaux sensiblement parallèles à l'axe et régulièrement répartis sur un cercle perpendiculaire à l'axe x.

Les figures 4a et 4b représentent schématiquement une coupe dans le plan de la feuille de la figure 3 (figure 4a) et une vue en perspective de la coupe de la figure 4a (figure 4b) d'un dispositif de couplage 30 permettant de coupler mécaniquement au moins un barreau piézoélectrique à ladite fibre optique de façon à transformer une dilatation ou contraction de chaque barreau piézoélectrique auquel il est relié en une variation d'élongation de la fibre optique. Le dispositif de couplage 30 permet de coupler l'extrémité mobile EI d'au moins un barreau 4, 5, 6, 7 au tronçon 11 de la fibre optique 12.

Sur la réalisation des figures 3 et 4, l'actionneur comprend deux dispositifs de couplage 30. Le tronçon de fibre optique 11 s'étend entre les deux dispositifs de couplage 30 et est précontraint de façon à être maintenu en tension entre les deux dispositifs de couplage 30.

Chaque dispositif de couplage 30 permet de coupler l'extrémité mobile EI de deux barreaux 4, 5 ou 6,7 au tronçon de fibre optique 11.

Le dispositif de couplage 30 pourrait être de la colle ou tout autre moyen de fixation.

Dans le mode préféré de réalisation, le dispositif de couplage 30 comprend un chariot 31 apte à se déplacer en translation par rapport au boîtier rigide selon la direction axiale x. Le chariot 31 est solidaire de la fibre optique 11 et plus précisément d'une portion de la fibre optique 11. Comme visible sur la figure 3, chaque extrémité mobile EI d'un barreau 4, 5, 6, 7 est fixée à un chariot 31 d'un dispositif de couplage 30.

Sur la réalisation des figures 3 et 4, les extrémités de deux barreaux piézoélectriques 4, 5 ou 6, 7 sont fixées à chaque chariot 31.

Le dispositif de couplage 30 comprend un organe de liaison 32 permettant de relier le chariot 31 au boîtier rigide 20. Sur la réalisation des figures 3, et 4a, 4b, 4c, l'organe de liaison 32 relie le chariot 31 à une zone de jonction 35 appartenant au dispositif de couplage et fixe par rapport au boîtier 20. En variante, l'organe de liaison 32 relie le chariot 31 directement au boîtier 20 et plus particulièrement au tube cylindrique 21. La zone de jonction 35 appartient alors au boîtier 20.

Avantageusement, l'organe de liaison 32 est conçu pour autoriser une translation du chariot 31 par rapport au boîtier 20 selon l'axe longitudinal x mais pour empêcher tout mouvement significatif du chariot 31 par rapport au boîtier 20 selon les directions radiales relativement à l'axe x. Autrement dit, l'organe de liaison présente une raideur axiale (parallèlement à l'axe x) inférieure à la raideur radiale (perpendiculairement à l'axe x).

Lorsque le signal électrique varie, chaque barreau piézoélectrique 4, 5, 6, 7 se dilate ou se contracte parallèlement à la direction axiale. Son extrémité mobile EI étant fixée à un chariot 31, cette déformation d'un barreau piézoélectrique 4, 5, 6, 7 tend à provoquer le déplacement du chariot 31 parallèlement à la direction axiale x comme représenté par les flèches sur la figure 3. Etant donné que l'organe de liaison 32 autorise une translation du chariot 31 par rapport au boîtier 20, le chariot 31 se déplace parallèlement à la direction axiale x par rapport au boîtier 20 entrainant avec lui la portion de la fibre optique 11 à laquelle il est fixé ce qui a pour effet de faire varier l'élongation de la zone sensible 12 de la fibre optique 11. La faible raideur axiale (c'est-à-dire selon la direction x) de l'organe de liaison 32 permet de limiter les dégradations de la sensibilité électro-acoustique du transducteur.

Lorsque le transducteur est soumis à une accélération transversale, les barreaux piézoélectriques fléchissent. La grande raideur de l'organe de liaison 32 dans une direction perpendiculaire à la direction axiale x permet d'éviter le mouvement de la portion de fibre 11a, 11b à laquelle est fixé le dispositif de couplage 30 dans un plan radial. La solution présentée permet par conséquent de diminuer la sensibilité du transpondeur aux accélérations. En effet, les lasers à cavités laser à fibres utilisés dans cette solution sont extrêmement sensibles à toute déformation. La solution limite la variation d'élongation de la fibre induite par les accélérations vues par le transpondeur tout en conservant une grande sensibilité électro-optique qui est donnée par une grande déformation axiale de la fibre par Volt d'excitation aux bonnes du transpondeur électro-optique. Autrement dit, la solution présentée sélectionne le mode de déformation excité électriquement tout en minimisant les modes de déformations induits dans des directions perpendiculaires à l'axe du laser à fibre. Le dispositif de liaison 32 permet également de réduire l'effet de petits défauts de fabrication, notamment de défaut de parallélisme entre les axes longitudinaux des barreaux et l'axe x en autorisant la déformation de la fibre optique uniquement dans la direction axiale.

Avantageusement, l'organe de liaison 32 est conçu pour autoriser une translation du chariot 31 par rapport au boîtier 20 parallèlement à l'axe x en empêchant tout mouvement significatif du chariot 31 par rapport au boîtier 20 selon toute direction dans un plan perpendiculaire à l'axe longitudinal x. A cet effet, l'organe de liaison est par exemple à symétrie de révolution autour de l'axe longitudinal x.

A cet effet, l'organe de liaison comprend au moins une pièce de flexion 33, 34 présentant une grande raideur dans une direction radiale. Cette grande raideur n'autorise pas le mouvement du chariot dans la direction radiale. La pièce de liaison 33, 34 est par ailleurs très étroite, dans la direction axiale, comparativement à sa dimension dans la direction radiale, de manière à présenter une faible raideur dans la direction axiale. Cette faible raideur autorise un déplacement du chariot 31 par rapport au boîtier 20 dans la direction axiale. Elle permet de ne pas trop dégrader la sensibilité du transducteur.

Dans le mode de réalisation représenté sur les figures 4a, 4b et 4c, l'organe de liaison 32 comprend deux lames de flexion 33, 34 s'étendant, au repos, dans des plans respectifs sensiblement perpendiculaires à l'axe longitudinal x. Elles relient le chariot 31 à la zone de jonction 35 solidaire du boîtier. Les lames de flexion 33, 34 présentent une grande raideur radiale et une faible raideur dans la direction axiale. Ce mode de réalisation permet d'interdire les rotations du chariot (et par conséquent de la fibre optique) autour d'axes perpendiculaires à l'axe x.

Avantageusement, les lames de flexion 33, 34 sont à symétrie de révolution autour de l'axe x.

En variante, l'organe de liaison 32 comprend une seule lame de flexion 33. Dans une autre variante, les lames de flexion sont remplacées par un ou plusieurs joints toriques reliant le chariot 31 et la zone de jonction 35 ou par tout autre moyen présentant une raideur importante selon la direction radiale et faible selon la direction radiale.

Sur la réalisation des figures 4a, 4b, 4c, le dispositif de couplage comprend un chariot 31 tubulaire cylindrique solidaire d'une portion du tronçon de la fibre optique 11. Le chariot 31 est à symétrie de révolution autour de l'axe x. Le chariot 31 est traversé par la fibre optique 10 qui s'étend longitudinalement selon l'axe x. Les deux lames de flexion 33, 34 sont des anneaux plats c'est à dire des disques présentant une ouverture centrale par laquelle la fibre optique traverse le chariot 31. Les lames de flexion 33, 34 sont à symétrie de révolution autour de l'axe x. Ces lames 33, 34 en forme d'anneaux plats entourent le chariot 31. Les lames 33, 34 s'étendent radialement depuis le chariot 31 jusqu'à la zone de jonction 35. Elles sont par exemple fixées au niveau des extrémités longitudinales respectives du chariot 31. Les extrémités longitudinales du chariot 31 sont les extrémités du chariot 31 parallèlement à l'axe x.

Sur la réalisation des figures 3 et 4a, 4b, la zone de jonction 35 est un tube solidaire du boîtier à symétrie de révolution autour de l'axe de la fibre. La zone de jonction 35 entoure les lames de flexion 33, 34 et la fibre optique 10. La zone de jonction 35 présente un diamètre intérieur supérieur au diamètre extérieur du chariot 31 de façon qu'un espace soit ménagé, selon la direction radiale, entre la surface extérieure du chariot 31 et la surface intérieure de la zone de jonction 35. Cela permet aux lames de se déformer librement en flexion.

Lorsque les barreaux 4, 5, 6, 7 se dilatent ou se contractent, ils exercent un effort axial sur le chariot 31 qui provoque la flexion des lames flexibles 33, 34 permettant ainsi la translation du chariot 31 dans la direction axiale x par rapport au boîtier comme cela est représenté sur la figure 4c. La figure 4c représente la forme du dispositif de couplage de la figure 4a après dilatation des barreaux 6 et 7. La déformation de l'ensemble formé par les lames flexibles 33, 34, le chariot 31 et la zone de jonction 35 est proche de celle d'un double parallélogramme déformable.

La disposition des deux lames 33, 34 respectivement de part et d'autre du chariot 31 selon la direction axiale, ou plus généralement espacées selon la direction axiale, rend impossible le mouvement de rotation du chariot 31 autour de l'axe x par rapport au boîtier 20. On évite ainsi les variations parasites du signal optique dues à des accélérations radiales.

Les lames de flexion peuvent être pleines ou ajourées.

Dans le mode de réalisation représenté sur les figures 3 et 5, l'actionneur comprend quatre barreaux piézoélectriques 4, 5, 6, 7 formant deux couples longitudinaux d'ensembles piézoélectriques et deux couples transversaux d'ensembles piézoélectriques. Les barreaux sont alignés deux à deux selon des axes respectifs sensiblement parallèles à l'axe x. Par ailleurs, l'actionneur présente trois plans de symétrie orthogonaux. Ce mode de réalisation permet de conserver un haut degré de symétrie ce qui permet de limiter la sensibilité du transducteur aux accélérations.

Avantageusement, le support 40 et/ou le chariot 31 et/ou la zone de jonction 35 sont réalisés dans un matériau présentant un coefficient de dilatation thermique (inférieur à $10.10^{-6}/K^{-1}$) à 15°c et à pression atmosphérique. Cela permet de limiter la sensibilité du dispositif aux variations de température et ainsi d'augmenter le nombre de transducteurs que l'on peut mettre en série sur une même fibre optique.

Le support 40 est avantageusement réalisé en Zerodur dont le coefficient de dilation thermique est très faible. Il pourrait en variante être réalisé en verre. Le chariot 31 est avantageusement réalisé en Zerodur. Il pourrait en variante être réalisé en verre. Ces pièces pourraient également être réalisées en titane avec une moins bonne efficacité dans la limitation de la sensibilité du transducteur aux variations de température.

Les lames 33, 34 sont par exemple des pièces métalliques, par exemple en acier. Ce matériau est bon marché et très disponible sur le marché.

Le boîtier est par exemple réalisé en titane ou en acier ou tout autre matériau résistant à la pression.

Le transducteur selon l'invention présente une dynamique très large. Il permet de mesurer des tensions allant du nanovolt à 10V.

## Revendications

1. Transducteur électro-optique (T) permettant de transformer un signal électrique délivré par un capteur (C) de mesure physique en un signal optique, ledit transducteur électro-optique (T) comprenant :

   • une fibre optique (10) comprenant un tronçon de fibre optique (11) comprenant une zone sensible (12), la fibre optique (10) véhiculant ledit signal optique, ledit signal optique étant représentatif d'une élongation de la zone sensible (12), le tronçon de fibre optique (11) étant tendu et s'étendant longitudinalement au repos sensiblement selon un axe longitudinal (x),
   • un actionneur piézoélectrique (A) comprenant au moins un ensemble piézoélectrique comprenant un barreau piézoélectrique (4, 5, 6, 7), le barreau piézoélectrique (4, 5, 6, 7) s'étendant longitudinalement au repos sensiblement parallèlement à l'axe longitudinal (x), ledit barreau piézoélectrique étant pourvu d'un couple d'électrodes (e+, e-) entre lesquelles le barreau piézoélectrique (4, 5, 6, 7) est destiné à être alimenté électriquement au moyen du signal électrique, ledit barreau piézoélectrique (4, 5, 6, 7) étant destiné à se déformer essentiellement par dilatation ou contraction dudit barreau parallèlement à l'axe longitudinal (x) en réponse à une variation du signal électrique et étant couplé mécaniquement au tronçon de fibre optique (11) de façon que cette dilatation ou contraction du barreau piézoélectrique (4, 5, 6, 7) entraîne une variation d'élongation de la zone sensible (12),

   **caractérisé en ce que** le barreau piézoélectrique (4, 5, 6, 7) est en monocristal et **en ce qu'**il est destiné à vibrer en mode 31 ou 32.

2. Transducteur électro-optique selon la revendication précédente, comprenant un boîtier (20) renfermant ledit actionneur (A), ledit tronçon de fibre optique (11), le barreau piézoélectrique (4, 5, 6, 7) comprenant une extrémité mobile (EI) apte à se déplacer par rapport au boîtier (20), lors de ladite dilatation ou de ladite contraction du barreau piézoélectrique (4, 5, 6, 7), sensiblement parallèlement à la direction longitudinale (x).

3. Transducteur électro-optique selon la revendication précédente, dans lequel ledit actionneur piézoélectrique (A) comprend un dispositif de couplage (30) permettant de coupler mécaniquement l'extrémité mobile (EI) au tronçon de fibre optique (11), ledit dispositif de couplage (30) comprenant un chariot (31) fixé à une portion du tronçon de fibre optique (11) et étant apte à se déplacer en translation par rapport au boîtier (20) selon l'axe longitudinal (x), ledit dispositif de couplage (30) comprenant en outre un organe de liaison (32) permettant de relier le chariot (31) à une zone de jonction (35) solidaire du boîtier (20), l'organe de liaison (32) étant conçu pour autoriser une translation du chariot (31) par rapport au boîtier (20) dans la direction axiale (x) mais pour empêcher tout mouvement significatif du chariot (31) par rapport au boîtier (20) dans un plan perpendiculaire à la direction axiale.

4. Transducteur électro-optique selon l'une quelconque des revendications 2 à 3, dans lequel le barreau piézoélectrique comprend une extrémité fixe (Ef), fixe par rapport au boîtier (20).

5. Transducteur électro-optique selon l'une quelconque des revendications 3 à 4, dans lequel l'organe de liaison (32) comprend au moins une lame de flexion (33, 34) s'étendant, au repos, dans un plan sensiblement perpendiculaire à l'axe longitudinal (x) et reliant le chariot (31) à une zone de jonction (35) solidaire du boîtier (20).

6. Transducteur électro-optique selon la revendication précédente, dans lequel la lame (33, 34) est à symétrie de révolution autour de l'axe (x).

7. Transducteur électro-optique selon l'une quelconque des revendications 5 à 6, comprenant deux lames (33, 34) s'étendant, au repos, dans des plans respectifs distincts sensiblement perpendiculaires à l'axe longitudinal.

8. Transducteur électro-optique selon l'une quelconque des revendications précédentes, comprenant un boîtier (20) renfermant l'actionneur piézoélectrique (A) et le tronçon de fibre optique (11), ledit actionneur piézoélectrique (A) comprend une pluralité d'ensembles piézoélectriques agencés de sorte à former au moins un couple dit longitudinal de deux ensembles piézoélectriques dont les barreaux piézoélectriques comprennent chacun une extrémité fixe (Ef) par rapport au boîtier (20) et une extrémité mobile (EI) apte à se déplacer par rapport au boîtier (20) sous l'effet d'une dilatation ou d'une contraction dudit barreau piézoélectrique, lesdits barreaux piézoélectriques des deux ensembles piézoélectriques du couple longitudinal étant alignés selon un axe sensiblement parallèle à l'axe longitudinal (x) et leurs extrémités mobiles (EI) se déplaçant en sens contraire sous l'effet d'une dilatation desdits barreaux ou sous l'effet d'une contraction desdits barreaux piézoélectriques parallèlement à l'axe longitudinal, les portions du tronçon de fibre (11) solidaires des extrémités mobiles (El) desdits barreaux piézoélectriques entourant la zone sensible (12).

9. Transducteur électro-optique selon la revendication précédente, dans lequel les extrémités fixes (Ef) des barreaux piézoélectriques des deux ensembles piézoélectriques du couple longitudinal sont positionnées l'une en regard de l'autre.

10. Transducteur électro-optique selon l'une quelconque des revendications 8 à 9, dans lequel l'actionneur piézoélectrique (A) présente un premier plan de symétrie (P) perpendiculaire à l'axe (x).

11. Transducteur électro-optique selon l'une quelconque des revendications précédentes, comprenant un boîtier (20) renfermant l'actionneur piézoélectrique (A) et le tronçon de fibre optique (11), ledit actionneur piézoélectrique (A) comprend une pluralité d'ensembles piézoélectriques agencés de sorte à former au moins un groupe dit transversal d'une pluralité d'ensembles piézoélectriques dont les barreaux piézoélectriques (4, 5 ; 6, 7) comprennent chacun une extrémité fixe (Ef) par rapport au boîtier (20) et une extrémité mobile (El) apte à se déplacer par rapport au boîtier (20) sous l'effet d'une dilatation ou d'un contraction dudit barreau piézoélectrique sensiblement parallèlement à l'axe longitudinal (x), lesdits barreaux piézoélectriques des ensembles piézoélectriques comprenant au moins un couple transverse d'ensembles piézoélectriques dont les barreaux piézoélectriques sont situés de part et respectivement d'autre part de l'axe longitudinal (x) selon une direction perpendiculaire à l'axe longitudinal (x), étant solidaires d'une même portion du tronçon de fibre optique (11) et se déplaçant dans le même sens sous l'effet d'une dilatation desdits barreaux piézoélectriques ou sous l'effet d'une contraction desdits barreaux piézoélectriques parallèlement à l'axe longitudinal.

12. Transducteur électro-optique selon la revendication 11 et selon la revendication 8, comprenant quatre ensembles piézoélectriques formant deux couples longitudinaux et deux groupes transverses, chaque groupe transverse comprenant chacun un couple transverse.

13. Transducteur électro-optique selon l'une quelconque des revendications précédentes, dans lequel l'actionneur piézoélectrique (A) présente deux plans de symétrie perpendiculaires l'un à l'autre et contenant l'axe (x).

14. Transducteur électro-optique selon l'une quelconque que des revendications 3 à 7 ou 8 à 13 en ce qu'elles dépendent de la revendication 3, dans lequel le chariot (31) et/ou la zone de jonction (35) et/ou le boîtier sont réalisés dans un matériau présentant un coefficient de dilatation thermique inférieur à $10.10^{-6}/K^{-1}$ à 15°C et à pression atmosphérique.

15. Dispositif de mesure d'une grandeur physique comprenant un transducteur électro-optique (T) selon l'une quelconque des revendications précédentes, un capteur (C) apte à délivrer le signal électrique, le signal électrique étant représentatif d'une grandeur physique mesurée par ledit capteur, ledit capteur (C) étant couplé électriquement audit barreau de façon à alimenter électriquement ledit barreau piézoélectrique au moyen du signal électrique.

16. Dispositif de mesure d'une grandeur physique selon la revendication précédente, comprenant une pluralité d'ensembles piézoélectriques dont les barreaux piézoélectrique respectifs sont couplés audit capteur de façon que les barreaux piézoélectriques se dilatent simultanément ou se contractent simultanément.

17. Dispositif de mesure selon l'une quelconque des revendications 15 à 16, dans lequel le capteur comprend une pluralité de senseurs montés en série et/ou en parallèle.

**Patentansprüche**

1. Elektrooptischer Wandler (T) zum Umwandeln eines von einem physikalischen Messsensor (C) gelieferten elektrischen Signals in ein optisches Signal, wobei der elektrooptische Wandler (T) Folgendes umfasst:

  • eine Lichtleitfaser (10), die einen Lichtleitfaserabschnitt (11) mit einer empfindlichen Zone (12) umfasst, wobei die Lichtleitfaser (10) das optische Signal führt, wobei das optische Signal für eine Dehnung der empfindlichen Zone (12) repräsentativ ist, wobei der Lichtleitfaserabschnitt (11) gespannt ist und sich im Ruhezustand im Wesentlichen entlang einer Längsachse (x) erstreckt,
  • einen piezoelektrischen Aktor (A) mit mindestens einer piezoelektrischen Baugruppe, die einen piezoelektrischen Stab (4, 5, 6, 7) umfasst, wobei sich der piezoelektrische Stab (4, 5, 6, 7) im Ruhezustand longitudinal im Wesentlichen parallel zur Längsachse (x) erstreckt, wobei der piezoelektrische Stab mit einem Paar Elektroden (e+, e-) versehen ist, zwischen denen der piezoelektrische Stab (4, 5, 6, 7) mittels des elektrischen Signals mit Strom versorgt werden soll, wobei der piezoelektrische Stab (4, 5, 6, 7) dazu bestimmt ist, sich im Wesentlichen durch Ausdehnen oder Zusammenziehen des Stabs parallel zur Längsachse (x) als Reaktion auf eine Veränderung des elektrischen Signals zu verformen, und mechanisch mit dem Lichtleitfaserabschnitt (11) gekoppelt ist, so dass dieses Ausdehnen oder Zusammenziehen des piezoelektrischen Stabes (4, 5, 6, 7) zu einer Dehnungsveränderung der empfindlichen Zone (12) führt,

**dadurch gekennzeichnet, dass** der piezoelektrische Stab (4, 5, 6, 7) aus einem Einkristall ist, und dadurch, dass er zum Schwingen in Mode 31 oder 32 bestimmt ist.

2. Elektrooptischer Wandler nach dem vorherigen Anspruch mit einem Gehäuse (20), das den Aktor (A) und den Lichtleitfaserabschnitt (11) umschließt, wobei der piezoelektrische Stab (4, 5, 6, 7) ein bewegliches Ende (E1) aufweist, das sich bei Ausdehnung oder Zusammenziehen des piezoelektrischen Stabs (4, 5, 6, 7) im Wesentlichen parallel zur Längsrichtung (x) in Bezug auf das Gehäuse (20) bewegen kann.

3. Elektrooptischer Wandler nach dem vorherigen Anspruch, wobei der piezoelektrische Aktor (A) eine Kopplungsvorrichtung (30) zum mechanischen Koppeln des beweglichen Endes (E1) mit dem Lichtleitfaserabschnitt (11) umfasst, wobei die Kopplungsvorrichtung (30) einen Schlitten (31) umfasst, der an einem Teil des Lichtleitfaserabschnitt (11) befestigt ist und sich relativ zum Gehäuse (20) translational entlang der Längsachse (x) bewegen kann, wobei die Kopplungsvorrichtung (30) ferner ein Verbindungselement (32) zum Verbinden des Schlittens (31) mit einer mit dem Gehäuse (20) integralen Verbindungszone (35) umfasst, wobei das Verbindungselement (32) so ausgelegt ist, dass es eine Translation des Schlittens (31) relativ zum Gehäuse (20) in der axialen Richtung (x) zulässt, jedoch eine signifikante Bewegung des Schlittens (31) relativ zum Gehäuse (20) in einer Ebene lotrecht zur axialen Richtung verhindert.

4. Elektrooptischer Wandler nach einem der Ansprüche 2 bis 3, wobei der piezoelektrische Stab ein relativ zum Gehäuse (20) fixiertes festes Ende (Ef) aufweist.

5. Elektrooptischer Wandler nach einem der Ansprüche 3 bis 4, wobei das Verbindungselement (32) mindestens ein Durchbiegungsblatt (33, 34) aufweist, das sich im Ruhezustand in einer Ebene im Wesentlichen lotrecht zur Längsachse (x) erstreckt und den Schlitten (31) mit einer mit dem Gehäuse (20) integralen Verbindungszone (35) verbindet.

6. Elektrooptischer Wandler nach dem vorherigen Anspruch, bei dem das Blatt (33, 34) um die Achse (x) rotationssymmetrisch ist.

7. Elektrooptischer Wandler nach einem der Ansprüche 5 bis 6, der zwei Blätter (33, 34) umfasst, die sich im Ruhezustand in jeweiligen separaten Ebenen im Wesentlichen lotrecht zur Längsachse erstrecken.

8. Elektrooptischer Wandler nach einem der vorherigen Ansprüche, der ein Gehäuse (20) umfasst, das den piezoelektrischen Aktor (A) und den Lichtleitfaserabschnitt (11) umschließt, wobei der piezoelektrische Aktor (A) mehrere piezoelektrische Baugruppen umfasst, die zum Bilden mindestens eines sogenannten Längspaares aus zwei piezoelektrischen Baugruppen ausgelegt sind, deren piezoelektrische Stäbe jeweils ein relativ zum Gehäuse (20) festes Ende (Ef) und ein bewegliches Ende (E1) umfassen, das sich unter der Wirkung von Ausdehnung oder Zusammenziehen des piezoelektrischen Stabs relativ zum Gehäuse (20) bewegen kann, wobei die piezoelektrischen Stäbe der beiden piezoelektrischen Baugruppen des Längspaares entlang einer Achse im Wesentlichen parallel zur Längsachse (x) ausgerichtet sind und ihre beweglichen Enden (E1) sich unter der Wirkung einer Ausdehnung der Stäbe oder unter der Wirkung eines Zusammenziehens der piezoelektrischen Stäbe parallel zur Längsachse in entgegengesetzte Richtungen bewegen, wobei die Teile des Lichtleiterabschnitts (11), die mit den beweglichen Enden (E1) der piezoelektrischen Stäbe integral sind, die empfindliche Zone (12) umgeben.

9. Elektrooptischer Wandler nach dem vorherigen Anspruch, wobei die festen Enden (Ef) der piezoelektrischen Stäbe der beiden piezoelektrischen Baugruppen des Längspaares einander gegenüberliegend positioniert sind.

10. Elektrooptischer Wandler nach einem der Ansprüche 8 bis 9, wobei der piezoelektrische Aktor (A) eine erste Symmetrieebene (P) lotrecht zur Achse (x) aufweist.

11. Elektrooptischer Wandler nach einem der vorherigen Ansprüche, der ein Gehäuse (20) umfasst, das den piezoelektrischen Aktor (A) und den Lichtleitfaserabschnitt (11) umschließt, wobei der piezoelektrische Aktor (A) mehrere piezoelektrische Baugruppen umfasst, die zum Bilden mindestens einer quer genannten Gruppe mehrerer piezoelektrischer Baugruppen ausgelegt sind, deren piezoelektrische Stäbe (4, 5; 6, 7) jeweils ein festes Ende (Ef) relativ zum Gehäuse (20) und ein bewegliches Ende (E1) aufweisen, das sich unter der Wirkung von Ausdehnung oder Zusammenziehen des piezoelektrischen Stabes im Wesentlichen parallel zur Längsachse (x) in Bezug auf das Gehäuse (20) bewegen kann, wobei die piezoelektrischen Stäbe der piezoelektrischen Baugruppen mindestens ein Querpaar von piezoelektrischen Baugruppen umfassen, deren piezoelektrische Stäbe sich auf beiden Seiten der Längsachse (x) in einer Richtung lotrecht zur Längsachse (x) befinden, mit einem gleichen Teil des Lichtleitfaserabschnitts (11) integral sind und sich unter der Wirkung einer Ausdehnung der piezoelektrischen Stäbe oder unter der Wirkung von Zusammenziehen der piezoelektrischen Stäbe parallel zur Längsachse in die gleiche Richtung bewegen.

**12.** Elektrooptischer Wandler nach Anspruch 11 und nach Anspruch 8, der vier piezoelektrische Baugruppen umfasst, die zwei Längspaare und zwei Quergruppen bilden, wobei jede Quergruppe jeweils ein Querpaar umfasst.

**13.** Elektrooptischer Wandler nach einem der vorherigen Ansprüche, wobei der piezoelektrische Aktor (A) zwei Symmetrieebenen lotrecht zueinander aufweist, die die Achse (x) enthalten.

**14.** Elektrooptischer Wandler nach einem der Ansprüche 3 bis 7 oder 8 bis 13 in Abhängigkeit von Anspruch 3, wobei der Schlitten (31) und/oder die Verbindungszone (35) und/oder das Gehäuse aus einem Material mit einem Wärmeausdehnungskoeffizienten von weniger als $10 \cdot 10^{-6}/K^{-1}$ bei 15°C und Atmosphärendruck bestehen.

**15.** Vorrichtung zur Messung einer physikalischen Größe, umfassend einen elektrooptischen Wandler (T) nach einem der vorherigen Ansprüche, einen Sensor (C), der das elektrische Signal liefern kann, wobei das elektrische Signal für eine von dem Sensor gemessene physikalische Größe repräsentativ ist, wobei der Sensor (C) elektrisch mit dem Stab gekoppelt ist, um den piezoelektrischen Stab mittels des elektrischen Signals mit Strom zu versorgen.

**16.** Vorrichtung zur Messung einer physikalischen Größe nach dem vorherigen Anspruch, mit mehreren piezoelektrischen Baugruppen, deren jeweilige piezoelektrische Stäbe mit dem Sensor gekoppelt sind, so dass sich die piezoelektrischen Stäbe gleichzeitig ausdehnen oder zusammenziehen.

**17.** Vorrichtung zur Messung einer physikalischen Größe nach den Ansprüchen 15 bis 16, wobei der Sensor mehrere in Serie und/oder parallel geschaltete Fühler umfasst.

**Claims**

**1.** An electro-optical transducer (T) for converting an electrical signal delivered by a physical measurement sensor (C) into an optical signal, said electro-optical transducer (T) comprising:

    • an optical fiber (10) comprising a section of optical fiber (11) comprising a sensitive area (12), the optical fiber (10) conveying said optical signal, said optical signal being representative of an elongation of the sensitive area (12), the section of optical fiber (11) being taut and extending longitudinally at rest substantially along a longitudinal axis (x),

    • a piezoelectric actuator (A) comprising at least one piezoelectric assembly comprising a piezoelectric bar (4, 5, 6, 7), the piezoelectric bar (4, 5, 6, 7) extending longitudinally at rest substantially parallel to the longitudinal axis (x), said piezoelectric bar being provided with a pair of electrodes (e+, e-) between which the piezoelectric bar (4, 5, 6, 7) is intended to be supplied with electric power by way of the electrical signal, said piezoelectric bar (4, 5, 6, 7) being intended to deform essentially through expansion or contraction of said bar parallel to the longitudinal axis (x) in response to a variation in the electrical signal and being coupled mechanically to the section of optical fiber (11) such that this expansion or contraction of the piezoelectric bar (4, 5, 6, 7) brings about a variation in elongation of the sensitive area (12),

**characterized in that** the piezoelectric bar (4, 5, 6, 7) is formed of a single crystal and **in that** it is intended to vibrate in mode 31 or 32.

**2.** The electro-optical transducer according to the preceding claim, comprising a housing (20) enclosing said actuator (A), said section of optical fiber (11), the piezoelectric bar (4, 5, 6, 7) comprising a mobile end (El) able to move with respect to the housing (20) upon said expansion or said contraction of the piezoelectric bar (4, 5, 6, 7) substantially parallel to the longitudinal direction (x).

**3.** The electro-optical transducer according to the preceding claim, wherein said piezoelectric actuator (A) comprises a coupling device (30) for mechanically coupling the mobile end (El) to the section of optical fiber (11), said coupling device (30) comprising a carriage (31) fixed to a portion of the section of optical fiber (11) and being able to move in translation with respect to the housing (20) along the longitudinal axis (x), said coupling device (30) furthermore comprising a linking unit (32) for linking the carriage (31) to a joining area (35) integral with the housing (20), the linking unit (32) being designed to permit a translation of the carriage (31) with respect to the housing (20) in the axial direction (x) but to prevent any significant movement of the carriage (31) with respect to the housing (20) in a plane perpendicular to the axial direction.

4. The electro-optical transducer according to any one of claims 2 and 3, wherein the piezoelectric bar comprises a fixed end (Ef), which is fixed with respect to the housing (20).

5. The electro-optical transducer according to any one of claims 3 and 4, wherein the linking unit (32) comprises at least one flexion strip (33, 34) extending, at rest, in a plane substantially perpendicular to the longitudinal axis (x) and linking the carriage (31) to a joining area (35) integral with the housing (20).

6. The electro-optical transducer according to the preceding claim, wherein the strip (33, 34) is rotationally symmetrical about the axis (x).

7. The electro-optical transducer according to any one of claims 5 and 6, comprising two strips (33, 34) extending, at rest, in different respective planes that are substantially perpendicular to the longitudinal axis.

8. The electro-optical transducer according to any one of the preceding claims, comprising a housing (20) enclosing the piezoelectric actuator (A) and the section of optical fiber (11), said piezoelectric actuator (A) comprises a plurality of piezoelectric assemblies arranged so as to form at least one pair, called longitudinal pair, of two piezoelectric assemblies whose piezoelectric bars each comprise an end (Ef) that is fixed with respect to the housing (20) and a mobile end (El) able to move with respect to the housing (20) under the effect of an expansion or of a contraction of said piezoelectric bar, said piezoelectric bars of the two piezoelectric assemblies of the longitudinal pair being aligned along an axis substantially parallel to the longitudinal axis (x) and their mobile ends (El) moving in opposite directions under the effect of an expansion of said bars or under the effect of a contraction of said piezoelectric bars parallel to the longitudinal axis, the portions of the section of fiber (11) that are integral with the mobile ends (El) of said piezoelectric bars surrounding the sensitive area (12).

9. The electro-optical transducer according to the preceding claim, wherein the fixed ends (Ef) of the piezoelectric bars of the two piezoelectric assemblies of the longitudinal pair are positioned facing one another.

10. The electro-optical transducer according to any one of claims 8 and 9, wherein the piezoelectric actuator (A) has a first plane of symmetry (P) perpendicular to the axis (x).

11. The electro-optical transducer according to any one of the preceding claims, comprising a housing (20) enclosing the piezoelectric actuator (A) and the section of optical fiber (11), said piezoelectric actuator (A) comprises a plurality of piezoelectric assemblies arranged so as to form at least one group, called transverse group, of a plurality of piezoelectric assemblies whose piezoelectric bars (4, 5; 6, 7) each comprise an end (Ef) that is fixed with respect to the housing (20) and a mobile end (El) able to move with respect to the housing (20) under the effect of an expansion or of a contraction of said piezoelectric bar substantially parallel to the longitudinal axis (x), said piezoelectric bars of the piezoelectric assemblies comprising at least one transverse pair of piezoelectric assemblies whose piezoelectric bars are situated respectively on either side of the longitudinal axis (x) in a direction perpendicular to the longitudinal axis (x), being integral with one and the same portion of the section of optical fiber (11) and moving in the same direction under the effect of an expansion of said piezoelectric bars or under the effect of a contraction of said piezoelectric bars parallel to the longitudinal axis.

12. The electro-optical transducer according to claim 11 and according to claim 8, comprising four piezoelectric assemblies forming two longitudinal pairs and two transverse groups, each transverse group each comprising a transverse pair.

13. The electro-optical transducer according to any one of the preceding claims, wherein the piezoelectric actuator (A) has two planes of symmetry that are perpendicular to one another and contain the axis (x).

14. The electro-optical transducer according to any one of claims 3 to 7 or 8 to 13 where these are dependent on claim 3, wherein the carriage (31) and/or the joining area (35) and/or the housing are made from a material having a coefficient of thermal expansion of less than $10.10^{-6}/K^{-1}$ at 15°C and at atmospheric pressure.

15. A device for measuring a physical quantity comprising an electro-acoustic transducer (T) according to any one of the preceding claims, a sensor (C) able to deliver the electrical signal, the electrical signal being representative of a physical quantity measured by said sensor, said sensor (C) being coupled electrically to said bar so as to supply said piezoelectric bar with electric power by way of the electrical signal.

16. The device for measuring a physical quantity according to the preceding claim, comprising a plurality of piezoelectric assemblies whose respective piezoelectric bars are coupled to said sensor such that the piezoelectric bars expand simultaneously or contract simultaneously.

17. The measurement device according to any one of claims 15 to 16, wherein the sensor comprises a plurality of sensors connected in series and/or in parallel.

FIG.1

FIG.2

FIG.3

FIG.4a

FIG.4b

FIG.4c

EP 3 390 989 B1

FIG.5

**EP 3 390 989 B1**

## RÉFÉRENCES CITÉES DANS LA DESCRIPTION

**Documents brevets cités dans la description**

- WO 2007056827 A